# EUROPEAN PATENT APPLICATION

(11) **EP 1 596 391 A1**
(43) Date of publication of application: **16.11.2005**
(21) Application number: 05103721.6
(22) Date of filing: 04.05.2005
(51) Int. Cl.: G11B 20/10

(54) **Remotely controlling sound system**

(30) Priority: 13.05.2004 US 844700
(71) Applicant: BOSE CORPORATION, Framingham, Massachusetts 01701-9168 (US)
(72) Inventor: Bose, Amar G., Dr., Framingham, Massachusetts 01701-9168 (US)
(74) Representative: Brunner, Michael John

(57) **Abstract**

A sound reproducing system having at least a radio and left and right loudspeakers in a base enclosure is free of at least manually selectable vol ume controlling and radio tuning. A remote controller includes at least manually selectable volume and tuning controls.

## Description

The present invention relates in general to remotely controlling sound reproduction and more particularly concerns apparatus and techniques for remotely controlling a sound system in an enclosure that includes at least a radio and may also include a CD player with the enclosure preferably free of all manual selectors and at least free of volume control selectors, tuning selectors, CD play/pause selectors and CD track selectors.

### BACKGROUND OF THE INVENTION

For background, reference is made to the commercially available Bose@ Wave@ radio/CD incorporated herein by reference.

### SUMMARY OF THE INVENTION

According to the invention, a sound reproducer has a base enclosure that includes left and right loudspeakers and a radio. The base enclosure is free of at least manually selectable controls for volume and station tuning. An embodiment also having a CD player in the base enclosure is also free of at least manually selectable play/pause controls, stop/eject controls, and track controls. There is a remote controller that has all manually selectable controls for controlling the reproduced sound from the base enclosure, typically an infrared remote control. Preferably, the base enclosure is free of all manually selectable controls.

Numerous other features, objects and advantages will be come apparent from the following detailed description when read in connection with the accompanying drawing in which:

### BRIEF DESCRIPTION OF THE DRAWINGS

FIG. 1 is a perspective view of the commercially available Bose@ Wave@ radio/CD;
FIG. 2 is a perspective view of a radio/CD according to the invention that is free of all manually selectable controls; and
FIG. 3 is a plan view of a remote control for remotely controlling all the functions of the radio/CD of FIG. 2.

### DETAILED DESCRIPTION

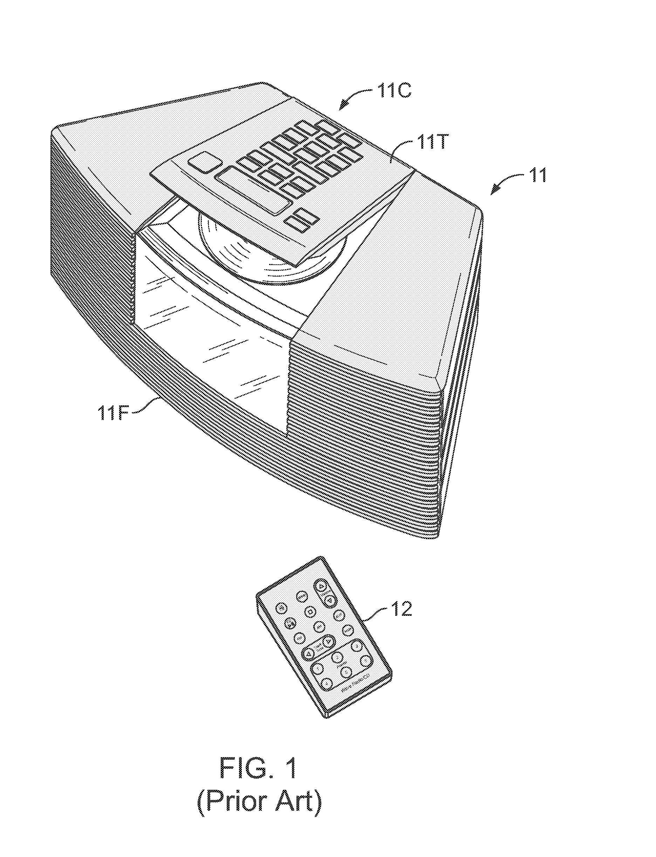

With reference now to the drawing and more particularly FIG. 1 thereof, there is shown a perspective view of a commercially available Bose@ Wave@ radio/CD comprising a base enclosure 11 having a clock radio and CD player with left and right loudspeakers behind the front grill 11 F. There are a number of manually selectable controls 11C on the top panel 11T that are duplicated on remote control 12.

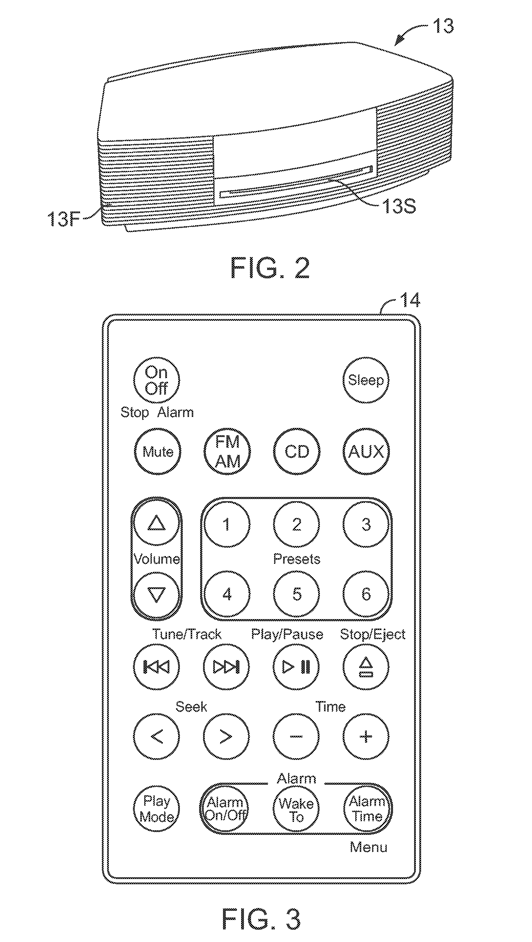

Referring to FIG. 2, there is shown a perspective view of a clock radio/CD base enclosure 13 according to the invention that is entirely free of manually selectable controls. This embodiment also includes a CD player having a slot 13S on the front panel 13F for receiving and ejecting CD's. There are left and right loudspeakers behind front grill 13F, preferably comprising acoustic waveguide loudspeaker systems.

Referring to FIG. 3, there is shown a plan view of a remote control for controlling the radio/CD of FIG. 2. Remote control 14 includes 26 pressure-sensitive switches labeled according to their functions. Play mode functions to select shuffle and repeat CD play modes. Alarm on/off switch turns the alarm on or off. Wake to switch sets playing the radio or CD as an alarm. The alarm time switch enters the alarm time setup mode when pressed once and enters the system setup menu when pressed and held for at least a second. The time - and + switches set clock time and in the alarm set mode set alarm time. The seek switches find the next radio station with a strong signal.

The tune/track switches skip to the next/previous stored radio frequency or skip to the next/previous CD track. The play/pause switch plays a CD or pauses a playing CD. The stop/eject switch stops a playing CD when pressed once and ejects a stopped CD when pressed again. The presets store a radio station for quick recall when pressed and held and recall a stored radio location when pressed after storage. The mute switch silences audio when pressed and restores audio when pressed again. The FM/AM switch turns the radio on and switches between FM and AM when pressed again. The CD switch turns the CD player on. The AUX switch causes audio from an external source to be heard when pressed. The On/Off switch turns the power on or off and st ops a sounding alarm. The sleep switch snoozes a sounding alarm and sets the unit to shut off automatically after a predetermined number of minutes.

The invention is embodied in the Bose@ Wave@ Radio/CD II commercially available shortly after the filing date of this application.

An important object of the invention is to motivate users of the radio/CD to listen to the sound reproducing system at a distance from the base enclosure where it is believed the perceived sound quality is better than when the us er is closely adjacent to the base enclosure.

It is evident that those skilled in the art may now make numerous uses and modifications of and departures from the apparatus and techniques herein disclosed without departing from the inventive concepts. Co nsequently, the invention is to be construed as embracing each and every novel feature and novel combination of features present or possessed by the apparatus and technique herein disclosed and limited solely by the spirit of the appended claims.

## Claims

1. A sound reproducing apparatus having at least a remotely controlled radio and left and right loudspeakers in a base enclosure comprising,
a remote controller having at least manually selectable controls constructed and arranged to control volume and radio tuning,
said base enclosure being free of at least manually selectable controls constructed and arranged to control volume and tuning.

2. A sound reproducing apparatus in accordance with claim 1, wherein said base enclosure is free of all manually selectable controls,
and said remote controller contains all manually selectable controls constructed and arranged to control all manually controllable parameters of said radio.

3. A sound reproducing apparatus in accordance with claim 1, wherein said base enclosure further includes a CD player and said remote controller further includes at least manually selectable controls constructed and arranged to control play/pause and stop/eject of said CD player and said base enclosure is free of manually selectable controls constructed and arranged for play/pause and stop/eject controls.

4. A sound reproducing apparatus in accordance with claim 3, wherein said base enclosure is free of all manually selectable controls and said remote controller includes manually selectable controls constructed and arranged to also operate all functions of said CD player.
